# EUROPEAN PATENT APPLICATION

(11) **EP 4 311 814 A1**
(43) Date of publication of application: **31.01.2024**
(21) Application number: 22306153.2
(22) Date of filing: 29.07.2022
(51) Int. Cl.: C04B 24/26, C04B 28/16, C04B 103/30

(54) **PROCESS FOR PREPARING WET CONCRETE COMPOSITIONS AND A METHOD FOR CONTROLLING MIXABILITY, RHEOLOGY AND/OR OPEN TIME OF WET CONCRETE COMPOSITIONS**

(71) Applicant: Ecocem Materials Limited, Dublin 3 D03E0C0 (IE); Ecole Normale Supérieure Paris-Saclay, 91190 Gif-sur-Yvette (FR); Centre National de la Recherche Scientifique (CNRS), 75016 Paris (FR)
(72) Inventor: FROUIN, Laurent, 75012 PARIS (FR); ALFANI, Roberta, 75012 PARIS (FR); MYRTJA, Erisa, 75012 PARIS (FR); CRUICKSHANK, Matthew, 75012 PARIS (FR); CHAOUCHE, Mohend, 91190 GIF SUR YVETTE (FR)
(74) Representative: Plasseraud IP

(57) **Abstract**

Process for preparing a wet concrete composition comprising a step of mixing with water:
A. at least one aggregate,
B. a binder system, in an amount of 400 Kg per m³ of the wet concrete composition or less, preferably less than 370 Kg per m³ of the wet concrete composition,
C. an admixture formulation,

the binder system (B.) being prepared before the mixing step or in situ during the mixing step, from at least some of the different components of the binder system; said components being taken separately and/or under the form of premix(es),
wherein the binder system (B.) comprises:
(B1) between 1% and 34% in dry weight of at least one lime source;
(B2) between 5% and 75% in dry weight of ground granulated blast furnace slag;
(B3) between 21% and 90% in dry weight of at least one filler;
(B4) Between 0.1% and 5% in dry weight, relative to the total weight of components B1, B2 and B3, of SO₃;
wherein said admixture formulation (C.) comprises:
(C3) at least one water reducing polymer;
(C4) optionally a wetting agent and/or a surfactant;

wherein the step of mixing with water is carried out with a water to binder system (B.) weight ratio comprised between 0.2 and 0.4, and more advantageously between 0,25 and 0,35.

## Description

### Technical field

This disclosure pertains to the field of concrete compositions. The technical field of the invention relates to hydraulic mineral binders including at least one slag, for instance a Ground Granulated Blast furnace Slag (GGBS or slag), which are used in compositions able to set and harden, such as concrete compositions.

More particularly, the invention relates to a process for preparing a wet concrete composition and a method for controlling the mixability, the rheology and/or the open time of said wet concrete composition.

### Background Art

Portland cement production has a strong and negative impact on the environment due to the emissions of large quantities of carbon dioxide. The production of cement inherently generates CO₂ during the calcination of the raw materials at very high temperature (1450°C) in a kiln through decarbonation of the limestone (Eq. (1)):

CaCO₃ (s) → CaO (s) + CO₂ (g) (Eq. (1))

In addition, carbon dioxide is released as a result of the combustion of the fossil fuels needed to heat the cement kiln. By adding the additional emissions of grinding, almost one ton of CO₂ per ton of Portland cement is obtained. Overall, the cement industry is responsible for about 7 to 9% of the global carbon dioxide emissions.

Moreover, handling Portland cement may lead to health issues (such as allergy) due in particular to its high alkalinity (pH higher than 13). In addition, hazardous elements as hexavalent Chromium (Cr (VI)) may be released upon kneading, which is also unhealthy for the workers when it gets in contact with the skin. Although Cr (VI) reducing agents (as ferrous sulfate) are normally included in the cement powder, their efficiency is limited in time. Building workers, in particular those in the third world, are not expected to often check the deadline related to such treatments.

Most current research on new binders aims to replace cement in various applications by binders with lower environmental impact. One route is through using resources without their expensive treatment, such as by-products from other industries (waste for one industry, but primary resource for others). This is the case of blast-furnace slag which is a by-product of iron industry. By grinding this product into fine powder (GGBS) one can obtain a cementitious material that can be used in partial substitution of cement or used alone by adding some chemical activators.

It is important to note that the use of a GGBS is not only environmentally friendly but also leads to several enhanced properties when it's used to formulate mortars and concretes, such as high resistance to sulfate attack, low permeability, good resistance in a chemically aggressive environment, low heat of hydration (required in massive structures), excellent durability in general, possibility of immobilization of heavy metals or radionuclides, etc.

In addition, in view of limiting the impact on the environment, it is desirable to limit the quantity of water needed for hydraulically setting and hardened concrete composition. However, reducing the weight ratio water to binder composition, leads to several handling problems like low dynamic viscosity, rendering difficult the mixing step, low cinematic viscosity, increasing the spreading time, and control of duration of the open time, which is generally around 2 hours.

In this context, the invention aims at addressing at least one of the above problems and/or needs, through fulfilling at least one of the following objectives:
-O1- Providing a concrete composition which is an attractive substitute to Ordinary Portland Cement (OPC)-based compositions.
-O2- Providing a concrete composition which is environmentally friendly.
-O3- Providing a concrete composition which is more acceptable than OPC-based compositions, with respect to the health and safety issues.
-O5- Providing a concrete composition including a binder system and an admixture, which give rise to wet formulations with appropriate rheological properties, i.e stable rheology (good workability) during the usual setting time (e.g. from some minutes to several hours) required by the users of said wet formulation.
-O6- Providing a concrete composition which gives rise to a hardened material with required mechanical properties, especially an acceptable early strength (for instance 24 hours).
-O7- Providing a concrete composition, which gives rise to a hardened material with required durability.

### Summary

At least one of the above objectives is reached thanks to a process for preparing a wet concrete composition comprising a step of mixing with water:
A. at least one aggregate,
B. a binder system, in an amount of 400 Kg per m³ of the wet concrete composition or less, preferably less than 370 Kg per m³ of the wet concrete composition,
C. an admixture formulation,
the binder system (B.) being prepared before the mixing step or in situ during the mixing step, from at least some of the different components of the binder system; said components being taken separately and/or under the form of premix(es),
wherein the binder system (B.) comprises:
   (B1) between 1% and 34% in dry weight of at least one lime source;
   (B2) between 5% and 75% in dry weight of ground granulated blast furnace slag;
   (B3) between 21% and 90% in dry weight of at least one filler;
   (B4) Between 0.1% and 5% in dry weight, relative to the total weight of components B1, B2 and B3, of SO₃;
   said ground granulated blast furnace slag being a particles mixture of particles having a d₅₀ greater than or equal to 5 µm and strictly less than 15 µm, and optionally between 0,1% in weight, in respect with the total weight of the ground granulated blast furnace slag and 100% of particles having a d₅₀ between 1 µm and strictly less 5 µm.
   said filler being a particles mixture of particles having a d₅₀ greater than or equal to 0.05 µm and strictly less than 8 µm, and optionally between 0,1% and 50% in weight, in respect with the total weight of the filler of particles having a d₅₀ greater than or equal to 8 µm and strictly less than 200 µm,
   measurement of d₅₀ being done by Laser diffraction analysis, also known as Laser diffraction spectroscopy, by means of Laser diffraction analyzer such as "Mastersizer 2000" and commercialized by the MALVERN company, with the humid way method,
wherein said admixture formulation (C.) comprises:
   (C1) at least one water reducing polymer;
   (C2) optionally a wetting agent and/or a surfactant;
   said water reducing polymer (C1) being a polyethylene glycol bearing terminal phosphonate groups and/or a copolymer comprising the following monomeric units:
   - units UA 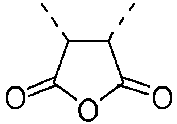
   - units UB 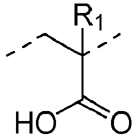
   - units UC 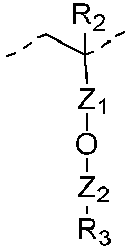
   - units UD 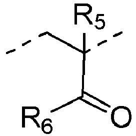
   wherein: - - - represents a bonding site of a monomeric unit
   the quantity of monomeric units UA is between 0 and 40 mol%,
   the quantity of monomeric units UB is between 25 and 95 mol%,
   the quantity of monomeric units UC is between 5 and 50 mol%,
   the quantity of monomeric units UD is between 0 and 25 mol%,
   R₁ and R₂ are independently hydrogen or methyl,
   Z₁ is a bond, a methyl or an ethyl,
   Z2 is a bond, -CH₂CH₂O-, -CH₂CH₂OCH₂CH₂O- or -CH₂CH₂CH₂CH₂O-
   R₃ is -(CH₂CH₂O)ₘ-R₄, -(CH(CH₃)CH₂O)ₙ-R₄ or -(CH₂CH₂OCH(CH₃)CH₂O)_{y}-R₄,
   m, n and y being an integer independently comprised between 7 and 100,
   R₄ is hydrogen, methyl,
   R₅ is hydrogen, methyl or -CH₂COOH, and
   R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
   R₇ being a saturated or unsaturated, linear or branched chain comprising from 2 to 12 carbon atoms and eventually one or more heteroatoms, preferably O, N or S,
   wherein the wetting agent and/or the surfactant decreases the surface tension of water below 68 mN.m⁻¹ and wherein the wetting agent is selected in the group comprising, preferably consisting of, glycol compounds and having a molecular weight comprised between 60 g.mol⁻¹ and 130 g.mol⁻¹, and wherein the surfactant have a molecular weight comprised between 131 g.mol⁻¹ and 300 g.mol⁻¹, and
   wherein the step of mixing with water is carried out with a water to binder system (B.) weight ratio comprised between 0.2 and 0.4, and more advantageously between 0,25 and 0,35.

The invention also concerns a method for controlling mixability, rheology and/or open time of a wet concrete composition including aggregate (A.), water (D.) and a binder system (B.) comprises:
(B1) between 1% and 34% in dry weight of at least one lime source;
(B2) between 5% and 75% in dry weight of ground granulated blast furnace slag;
(B3) between 21% and 90% in dry weight of at least one filler;
(B4) between 0.1% and 5% in dry weight, relative to the total weight of components B1, B2 and B3, of SO₃;
   (B1) said ground granulated blast furnace slag being a particles mixture of
   said ground granulated blast furnace slag being a particles mixture of particles having a d₅₀ greater than or equal to 5 µm and strictly less than 15 µm, and optionally between 0,1% in weight, in respect with the total weight of the ground granulated blast furnace slag and 100% of particles having a d₅₀ between 1 µm and strictly less 5 µm.
   said filler being a particles mixture of particles having a d₅₀ greater than or equal to 0.05 µm and strictly less than 8 µm, and optionally between 0,1% and 50% in weight, in respect with the total weight of the filler of particles having a d₅₀ greater than or equal to 8 µm and strictly less than 200 µm,
   measurement of d₅₀ being done by Laser diffraction analysis, also known as Laser diffraction spectroscopy, by means of Laser diffraction analyzer such as "Mastersizer 2000" and commercialized by the MALVERN company, with the humid way method,
   wherein a water (D.) to binder composition (B.) weight ratio is comprised between 0.2 and 0.4, and more advantageously between 0,25 and 0,35.
   said method including adding to said wet concrete composition an admixture formulation (C.) comprises:
      (C1) at least one water reducing polymer;
      (C2) optionally a wetting agent and/or a surfactant;
   said water reducing polymer (C1) being a polyethylene glycol bearing terminal phosphonate groups and/or a copolymer comprising the following monomeric units:
      - units UA 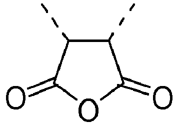
      - units UB 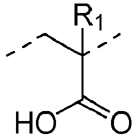
      - units UC 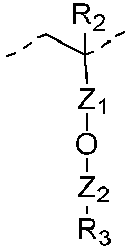
      - units UD 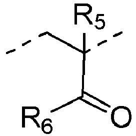
      wherein: - - - represents a bonding site of a monomeric unit
      the quantity of monomeric units UA is between 0 and 40 mol%,
      the quantity of monomeric units UB is between 25 and 95 mol%,
      the quantity of monomeric units UC is between 5 and 50 mol%,
      the quantity of monomeric units UD is between 0 and 25 mol%,
      R₁ and R₂ are independently hydrogen or methyl,
      Z₁ is a bond, a methyl or an ethyl,
      Z2 is a bond, -CH₂CH₂O-, -CH₂CH₂OCH₂CH₂O- or -CH₂CH₂CH₂CH₂O-
      R₃ is -(CH₂CH₂O)ₘ-R₄, -(CH(CH₃)CH₂O)ₙ-R₄ or -(CH₂CH₂OCH(CH₃)CH₂O)_{y}-R₄,
      m, n and y being an integer independently comprised between 7 and 100,
      R₄ is hydrogen, methyl,
      R₅ is hydrogen, methyl or -CH₂COOH, and
      R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
      R₇ being a saturated or unsaturated, linear or branched chain comprising from 2 to 12 carbon atoms and eventually one or more heteroatoms, preferably O, N or S,
      wherein the wetting agent and/or the surfactant, decreases the surface tension of water below 68 mN.m⁻¹ and wherein the wetting agent is selected in the group comprising, preferably consisting of, glycol compounds and having a molecular weight comprised between 60 g.mol⁻¹ and 130 g.mol⁻¹, and wherein the surfactant have a molecular weight comprised between 131 g.mol⁻¹ and 300 g.mol⁻¹.

The invention is additionally about a use of an admixture formulation (C.) comprising:
(C1) At least one water reducing polymer;
(C2) optionally a wetting agent and/or a surfactant;
said water reducing polymer (C1) being a polyethylene glycol bearing terminal phosphonate groups and/or a copolymer comprising the following monomeric units:
- units UA 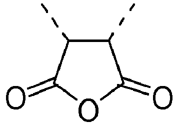
- units UB 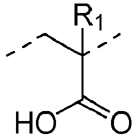
- units UC 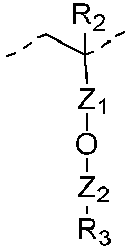
- units UD 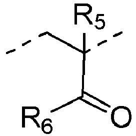 wherein: - - - represents a bonding site of a monomeric unit
   the quantity of monomeric units UA is between 0 and 40 mol%,
   the quantity of monomeric units UB is between 25 and 95 mol%,
   the quantity of monomeric units UC is between 5 and 50 mol%,
   the quantity of monomeric units UD is between 0 and 25 mol%,
   R₁ and R₂ are independently hydrogen or methyl,
   Z₁ is a bond, a methyl or an ethyl,
   Z2 is a bond, -CH₂CH₂O-, -CH₂CH₂OCH₂CH₂O- or -CH₂CH₂CH₂CH₂O-
   R₃ is -(CH₂CH₂O)ₘ-R₄, -(CH(CH₃)CH₂O)ₙ-R₄ or -(CH₂CH₂OCH(CH₃)CH₂O)_{y}-R₄,
   m, n and y being an integer independently comprised between 7 and 100,
   R₄ is hydrogen, methyl,
   R₅ is hydrogen, methyl or -CH₂COOH, and
   R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
   R₇ being a saturated or unsaturated, linear or branched chain comprising from 2 to 12 carbon atoms and eventually one or more heteroatoms, preferably O, N or S,
   wherein the wetting agent and/or the surfactant, decreases the surface tension of water below 68 mN.m⁻¹ and wherein the wetting agent is selected in the group comprising, preferably consisting of, glycol compounds and having a molecular weight comprised between 60 g.mol⁻¹ and 130 g.mol⁻¹, and wherein the surfactant have a molecular weight comprised between 131 g.mol⁻¹ and 300 g.mol⁻¹.
   for controlling mixability, rheology and/or open time of a wet concrete composition including aggregate (A.), water (D.) and a binder system (B.) in an amount of 400 Kg per m³ of the wet concrete composition and preferably less than 370 kg per m³ of the wet concrete composition comprises:
      (B1) between 1% and 34% in dry weight of at least one lime source;
      (B2) between 5% and 75% in dry weight of ground granulated blast furnace slag;
      (B3) between 21% and 90% in dry weight of at least one filler;
      (B4) between 0.1% and 5% in dry weight, relative to the total weight of components B1, B2 and B3, of SO₃;
      said ground granulated blast furnace slag being a particles mixture of particles having a d₅₀ greater than or equal to 5 µm and strictly less than 15 µm, and optionally between 0,1% in weight, in respect with the total weight of the ground granulated blast furnace slag and 100% of particles having a d₅₀ between 1 µm and strictly less 5 µm.
   said filler being a particles mixture of particles having a d₅₀ greater than or equal to 0.05 µm and strictly less than 8 µm, and optionally between 0,1% and 50% in weight, in respect with the total weight of the filler of particles having a d₅₀ greater than or equal to 8 µm and strictly less than 200 µm,
   measurement of d₅₀ being done by Laser diffraction analysis, also known as Laser diffraction spectroscopy, by means of Laser diffraction analyzer such as "Mastersizer 2000" and commercialized by the MALVERN company, with the humid way method,
   wherein a water (D.) to binder composition (B.) weight ratio is comprised between 0.2 and 0.4. and more advantageously between 0,25 and 0,35.

The invention further concerns a wet concrete composition comprising:
A. at least one aggregate,
B. a binder system in an amount of 400 Kg per m³ of the wet concrete composition and preferably less than 370 kg per m³ of the wet concrete composition,
C. an admixture formulation,
D. water,
wherein the binder system (B.) comprises:
(B1) between 1% and 34% in dry weight of at least one lime source;
(B2) between 5% and 75% in dry weight of ground granulated blast furnace slag;
(B3) between 21% and 90% in dry weight of at least one filler;
(B4) between 0.1% and 5% in dry weight, relative to the total weight of components B1, B2 and B3, of SO₃;
said ground granulated blast furnace slag being a particles mixture of particles having a d₅₀ greater than or equal to 5 µm and strictly less than 15 µm, and optionally between 0,1% in weight, in respect with the total weight of the ground granulated blast furnace slag and 100% of particles having a d₅₀ between 1 µm and strictly less 5 µm.
said filler being a particles mixture of particles having a d₅₀ greater than or equal to 0.05 µm and strictly less than 8 µm, and optionally between 0,1% and 50% in weight, in respect with the total weight of the filler of particles having a d₅₀ greater than or equal to 8 µm and strictly less than 200 µm,
measurement of d₅₀ being done by Laser diffraction analysis, also known as Laser diffraction spectroscopy, by means of Laser diffraction analyzer such as "Mastersizer 2000" and commercialized by the MALVERN company, with the humid way method,
wherein said admixture formulation (C.) comprises:
   (C1) at least one water reducing polymer;
   (C2) optionally a wetting agent and/or a surfactant;
   said water reducing polymer (C1) being a polyethylene glycol bearing terminal phosphonate groups and/or a copolymer comprising the following monomeric units:
   - units UA 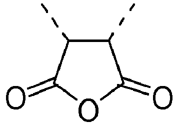
   - units UB 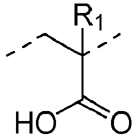
   - units UC 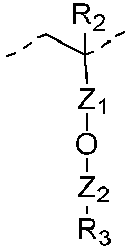
   - units UD 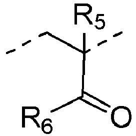
   wherein: - - - represents a bonding site of a monomeric unit
   the quantity of monomeric units UA is between 0 and 40 mol%,
   the quantity of monomeric units UB is between 25 and 95 mol%,
   the quantity of monomeric units UC is between 5 and 50 mol%,
   the quantity of monomeric units UD is between 0 and 25 mol%,
   R₁ and R₂ are independently hydrogen or methyl,
   Z₁ is a bond, a methyl or an ethyl,
   Z2 is a bond, -CH₂CH₂O-, -CH₂CH₂OCH₂CH₂O- or -CH₂CH₂CH₂CH₂O-
   R₃ is -(CH₂CH₂O)ₘ-R₄, -(CH(CH₃)CH₂O)ₙ-R₄ or -(CH₂CH₂OCH(CH₃)CH₂O)_{y}-R₄,
   m, n and y being an integer independently comprised between 7 and 100,
   R₄ is hydrogen, methyl,
   R₅ is hydrogen, methyl or -CH₂COOH, and
   R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
   R₇ being a saturated or unsaturated, linear or branched chain comprising from 2 to 12 carbon atoms and eventually one or more heteroatoms, preferably O, N or S,
   wherein the wetting agent and/or the surfactant, decreases the surface tension of water below 68 mN.m⁻¹ and wherein the wetting agent is selected in the group comprising, preferably consisting of, glycol compounds and having a molecular weight comprised between 60 g.mol⁻¹ and 130 g.mol⁻¹, and wherein the surfactant have a molecular weight comprised between 131 g.mol⁻¹ and 300 g.mol⁻¹,
   wherein a water to binder system (B.) weight ratio is comprised between 0.2 and 0.4, and more advantageously between 0,25 and 0,35.

The invention is in addition directed to a hardened concrete composition obtained from the wet concrete composition described above.

### Definitions

According to the terminology of this text, the following non limitative definitions have to be taken into consideration:
"slag" denotes a stony by-product matter separated from metals during the smelting or refining of ore.
"GGBS" or "GGBFS": Ground Granulated Blast Furnace Slag, which is equivalent to blast furnace slag, Granulated Blast Furnace Slag (GBFS), blast furnace ground slag powder.
"cement" is understood as meaning a powdery substance made for use in making mortar or concrete. It is a mineral hydraulic binder, possibly free from any organic compound. It refers to any ordinary cement and it includes slag Portland blended and alkali-activated based cements.
"binder" refers to "hydraulic binder" meaning any material that hardens just by adding water, like GGBS and cement.
"Dry concrete" refers to a material composed of binder(s), aggregates such as sand and gravel and other components, like admixtures. "Wet concrete" refers to a material composed of binder(s), aggregates such as sand and gravel and other components, like admixtures and water. "Hardened concrete" refers to the hardened product obtained from wet concrete after reaction and evaporation of the water.
"d₅₀" gives the median size of the granulometric distribution of material's particles (usually in micrometres for cementation materials). It means that 50% of the particles have a size less than the specified number and 50% of the particles have a size greater than the given number. The measurement of d₅₀ is done by Laser diffraction analysis, also known as Laser diffraction spectroscopy, by means of Laser diffraction analyzer such as "Mastersizer 2000" and commercialized by the MALVERN company, with the humid way method.
"filler" refers to a material whose primary role in a binder is physical rather than chemical. Fillers occupy pore spaces and are used as substitutes for hydraulic binders and supplementary cementitious materials as they are less energy intensive. Here the term refers to ground limestone, ground dolomite, marble powder, siliceous sands, recycled concrete fine aggregates or a mixture thereof.

### Brief Description of Drawings

**Fig. 1**

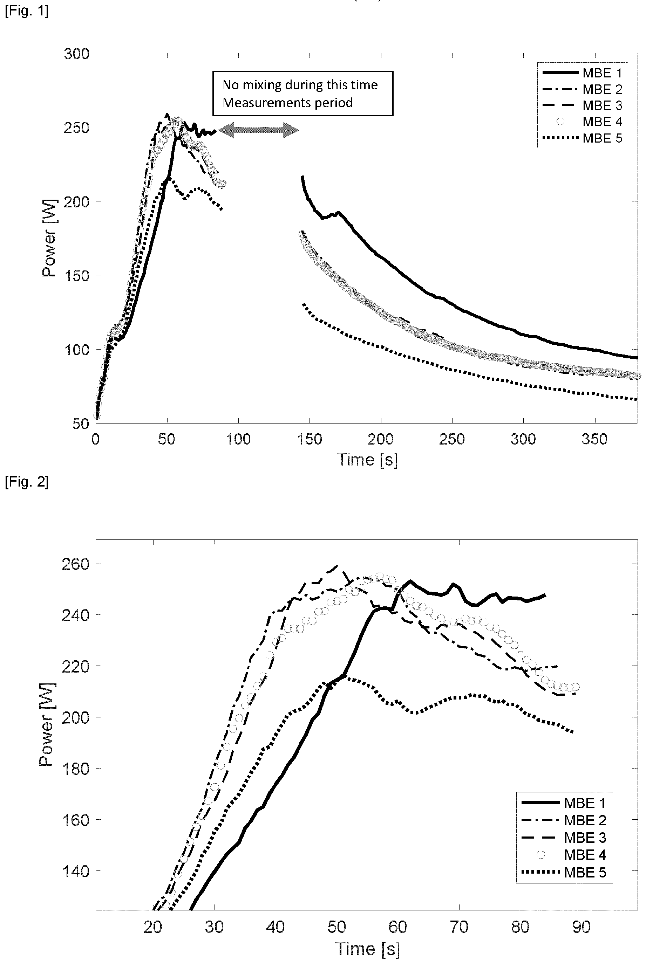

   Figure 1 is a graphic showing the power needed for mixing mortar concrete equivalent composition.
**Fig. 2**
   Figure 2 is a zoom of a part of figure 1.

### Detailed description

### The process for preparing a wet concrete composition

According to the invention, the binder system (B.) may be prepared before the mixing step or in situ during the mixing step, from at least some of the different components of the binder system; said components being taken separately and/or under the form of premix(es),

In other words, wet concrete composition could be prepared by two distinct methods.

In a first method, the binder system is prepared, and then mixed with the at least one aggregate. The obtained dry concrete composition is thereafter mixed with water.

In a second method, the wet concrete composition is prepared by mixing in water each component of the binder system and the aggregates.

According to the present disclosure, the term "mixing" has to be understood as any form of mixing.

In a preferred embodiment a part of the binder composition and at least a part of the water are mixed together prior to the mixing with the aggregate.

The step of mixing with water is carried out with a weight ratio water to binder composition (B.) comprised between 0.2 and 0.4, preferably between 0.25 and 0.35.

### The aggregate (A)

Aggregates comprise a large category of particulate material used in construction, including sands, gravels, crushed stones, slag (not-granulated), recycled concrete and geosynthetic aggregates. They serve as reinforcement to add strength to the overall composite material.

### The binder system

The binder system (B.) according to the invention comprises:
(B1) between 1% and 34% in dry weight of at least one lime source;
(B2) between 5% and 75% in dry weight of ground granulated blast furnace slag;
(B3) between 21% and 90% in dry weight of at least one filler;
(B4) between 0.1% and 5% in dry weight, relative to the total weight of components B1, B2 and B3, of SO₃;

### The component B1

The binder system according to the invention comprises between 1% and 34% in dry weight of a component B1, which is a lime source, preferably, between 3% and 25%, more preferably between 5% and 20%.

Preferably, the lime source is Portland cement or lime, such as hydraulic lime, calcium hydroxide, slaked lime, quick lime and lime slurry.

In case the lime source is Portland cement it is advantageous that at least a portion of the same is ultrafine cement having a d₅₀ lower than or equal to 8µm, preferably lower than or equal to 3.5µm. This embodiment is advantageous since it allows obtaining increased compressive strength compared to the other embodiment.

### The component B2

The binder system according to the invention comprises between 5% and 75% in dry weight of a component B2, which ground granulated blast furnace slag (GGBS) preferably, between 10% and 65%, more preferably between 15% and 50% and even more preferably between 20% and 40%.

According to the invention, the ground granulated blast furnace slag is a particle mixture of particles having a d₅₀ greater than or equal to 5µm and preferably less than 15µm. and optionally a portion of the ground granulated blast furnace slag is ultrafine, i.e. made of particles having a d₅₀ greater than or equal to 1µm and strictly less than 5µm.

### The component B3

The binder system according to the invention comprises between 21% and 90% in dry weight of a component B3, which is a filler being a particles mixture of particles having a d₅₀ greater than or equal to 0,05µm and strictly less than 8µm, and optionally a portion of particles having a d₅₀ greater than or equal to 8µm and strictly less than 200µm, preferably, between 30% and 80%, more preferably between 40% and 70%, even more preferably between 50% and 60%.

Preferably, the filler is a limestone filler, more preferably, the filler is a natural material sourcing from stone-pit, such as calcite and its polymorphs, like aragonite or vaterite, and dolomite or precipitated calcium carbonates and mixtures thereof.

This filler partition, in combination with the GGBS partition, allows obtaining a technical effect of reducing the viscosity and increasing the compressive strength of the binder composition and of the concrete or industrial mortars according to the invention.

### The component B4

According to the invention, the binder composition further comprises between 0.1% and 5% in dry weight, relative to the total weight of components (B1), (B2) and (B3) of SO₃⁻.

The content of the SO₃⁻ is determined in respect with the distribution of 30 components (B1), (B2) and (B3). In other words, the dry weight percentage of the SO₃⁻ is determined by considering that the sum of contents of components (B1), (B2) and (B3) represents 100% in dry weight.

Preferably, the SO₃⁻ is from sodium sulfate, potassium sulfate, calcium sulfate, anhydride sulfate, recycling gypse or mixture thereof.

### The admixture formulation

In the sense of the invention, "rheology enhancing admixture" means a single compound or a mixture of compounds which is used for controlling mixability, rheology and/or open time of a wet concrete composition or a wet mortar composition including at least a binder composition, aggregates and water.

The content of the rheology enhancing admixture is determined in respect with the distribution of components a, b and c. In other words, the dry weight percentage of the rheology enhancing admixture is determined by considering that the sum of contents of components a, b and c represents 100% in dry weight.

According to the invention, the water reducing polymer (C1) is a copolymer comprising the following monomeric units:
- units UA 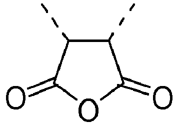
- units UB 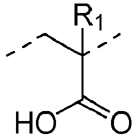
- units UC 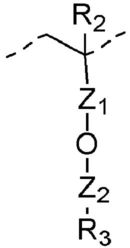
- units UD 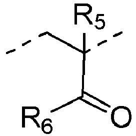
wherein: - - - represents a bonding site of a monomeric unit
the quantity of monomeric units UA is between 0 and 40 mol%,
the quantity of monomeric units UB is between 25 and 95 mol%,
the quantity of monomeric units UC is between 5 and 50 mol%,
the quantity of monomeric units UD is between 0 and 25 mol%,
R₁ and R₂ are independently hydrogen or methyl,
Z₁ is a bond, a methyl or an ethyl,
Z2 is a bond, -CH₂CH₂O-, -CH₂CH₂OCH₂CH₂O- or -CH₂CH₂CH₂CH₂O-
R₃ is -(CH₂CH₂O)ₘ-R₄, -(CH(CH₃)CH₂O)ₙ-R₄ or -(CH₂CH₂OCH(CH₃)CH₂O)_{y}-R₄
m, n and y being an integer independently comprised between 7 and 100,
R₄ is hydrogen, methyl,
R₅ is hydrogen, methyl or -CH₂COOH, and
R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
R₇ being a saturated or unsaturated, linear or branched chain comprising from 2 to 12 carbon atoms and eventually one or more heteroatoms, preferably O, N or S.

In an embodiment, the sum of the quantity of monomeric units UA, the quantity of monomeric units UB, the quantity of monomeric units UC, the quantity of monomeric units UD is equal to 100 mol%.

In another embodiment, the water reducing polymer (C1) comprise at least another monomeric units in a quantity of up to 20 mol%. Preferably, the at least another monomeric units results from the polymerization of any unsaturated monomer which can be copolymerized with any of the monomers contained in the PCE with the proviso that the resulting polymer cannot be one of the Tempo range of ViscoCrete^{®} superplasticizer, manufactured by Sika^{®}.

Preferably, the quantity of monomeric units UA is between 5 and 35 mol%, more preferably between 10 and 30 mol% and even more preferably between 15 and 25 mol%.

Preferably, the quantity of monomeric units UB is between 25 and 95 mol%, more preferably between 35 and 80 mol% and even more preferably between 45 and 65 mol%.

Preferably, the quantity of monomeric units UC is between 5 and 50 mol%, more preferably between 15 and 40 mol% and even more preferably between 20 and 30 mol%.

Preferably, the quantity of monomeric units UD is between 0 and 25 mol%, more preferably between 5 and 20 mol% and even more preferably between 10 and 15 mol%.

In embodiments wherein the water reducing polymer (C1) comprises phosphate functions, at least a part of the unities derived from a carboxylic acid monomer are substituted with a phosphate.

In embodiments wherein the water reducing polymer (C1) comprises phosphonate functions, at least a part of the unities derived from a carboxylic acid monomer are substituted with a phosphonate.

Preferably, the water reducing polymer (C1) is anionic, cationic or zwitterionic.

Preferably, the water reducing polymer has a molecular weight by weight comprised between 5 000 g.mol⁻¹ and 300000 g.mol⁻¹.

In an embodiment the water reducing polymer (C1) is a HPEG. HPEG are copolymers derived from (meth)acrylic acid, itaconic acid monomers and from ω-hydroxy-α-methallyl poly(ethylene glycol) macromonomers or ω-methoxy-α-methallyl poly(ethylene glycol).

In this embodiment, the water reducing polymer (C1) is a copolymer comprising the following monomeric units:
- units UB 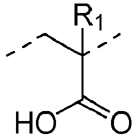
- units UC 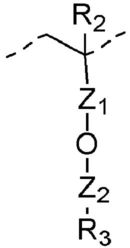
- units UD 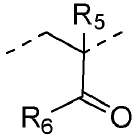
wherein: - - - represents a bonding site of a monomeric unit
the quantity of monomeric units UB is between 25 and 95 mol%,
the quantity of monomeric units UC is between 5 and 50 mol%,
the quantity of monomeric units UD is between 0 and 25 mol%,
R₁ is hydrogen or methyl,
R₂ is hydrogen
Z₁ is a methyl,
Z2 is a bond,
R₃ is -(CH₂CH₂O)ₘ-R₄, -(CH(CH₃)CH₂O)ₙ-R₄ or -(CH₂CH₂OCH(CH₃)CH₂O)_{y}-R₄
m, n and y being an integer independently comprised between 7 and 100,
R₄ is hydrogen or methyl,
R₅ is hydrogen, methyl or -CH₂COOH, and
R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
R₇ being a saturated or unsaturated, linear or branched chain comprising from 2 to 12 carbon atoms and eventually one or more heteroatoms, preferably O, N or S.

In this embodiment, preferably, the quantity of monomeric units UB is between 25 and 95 mol%, more preferably between 35 and 80 mol% and even more preferably between 45 and 65 mol%, the quantity of monomeric units UC is between 5 and 50 mol%, more preferably between 15 and 40 mol% and even more preferably between 20 and 30 mol% and, the quantity of monomeric units UD is between 1 and 25 mol%, more preferably between 5 and 20 mol% and even more preferably between 10 and 15 mol%.

In another embodiment, the water reducing polymer (C1) is an APEG. APEG are block copolymer of A-B-A-B type, wherein A unities are derived from maleic acid monomers and B unities are derived from ω-hydroxy-α-allyl poly(ethylene glycol) macromonomers.

In this embodiment, the water reducing polymer (C1) is a copolymer comprising the following monomeric units:
- units UA 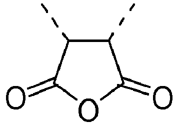
- units UB 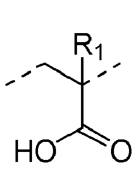
- units UC 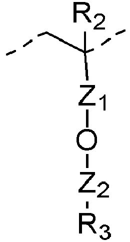
- units UD 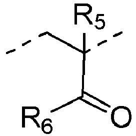
wherein: - - - represents a bonding site of a monomeric unit
the quantity of monomeric units UA is between 0 and 40 mol%,
the quantity of monomeric units UB is between 25 and 95 mol%,
the quantity of monomeric units UC is between 5 and 50 mol%,
the quantity of monomeric units UD is between 0 and 25 mol%,
R₁ is hydrogen or methyl,
R2 is hydrogen
Z₁ is a methyl,
Z2 is a bond,
R₃ is -(CH₂CH₂O)ₘ-R₄, -(CH(CH₃)CH₂O)ₙ-R₄ or -(CH₂CH₂OCH(CH₃)CH₂O)_{y}-R₄
m, n and y being an integer independently comprised between 7 and 100,
R₄ is hydrogen, methyl,
R₅ is hydrogen, methyl or -CH₂COOH, and
R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
R₇ being a saturated or unsaturated, linear or branched chain comprising from 2 to 12 carbon atoms and eventually one or more heteroatoms, preferably O, N or S.

In this embodiment, preferably, the quantity of monomeric units UA is between 5 and 35 mol%, more preferably between 10 and 30 mol% and even more preferably between 15 and 25 mol%, preferably, the quantity of monomeric units UB is between 25 and 95 mol%, more preferably between 35 and 80 mol% and even more preferably between 45 and 65 mol%, the quantity of monomeric units UC is between 5 and 50 mol%, more preferably between 15 and 40 mol% and even more preferably between 20 and 30 mol% and, the quantity of monomeric units UD is between 1 and 25 mol%, more preferably between 5 and 20 mol% and even more preferably between 10 and 15 mol%.

In another embodiment, the water reducing polymer (C1) is a VPEG. VPEG are vinyl ether-based PCEs.

In this embodiment, the water reducing polymer (C1) is a copolymer comprising the following monomeric units:
- units UB 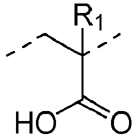
- units UC 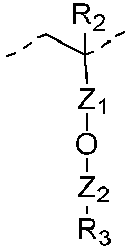
- units UD 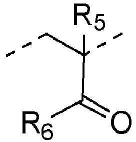
wherein: - - - represents a bonding site of a monomeric unit
the quantity of monomeric units UB is between 25 and 95 mol%,
the quantity of monomeric units UC is between 5 and 50 mol%,
the quantity of monomeric units UD is between 0 and 25 mol%,
R₁ is hydrogen or methyl,
R₂ is hydrogen
Z₁ is a bond,
Z2 is a bond, -CH₂CH₂O-, -CH₂CH₂OCH₂CH₂O- or -CH₂CH₂CH₂CH₂O-
R₃ is -(CH₂CH₂O)ₘ-R₄, -(CH(CH₃)CH₂O)ₙ-R₄ or -(CH₂CH₂OCH(CH₃)CH₂O)_{y}-R₄
m, n and y being an integer independently comprised between 7 and 100,
R₄ is hydrogen, methyl,
R₅ is hydrogen, methyl or -CH₂COOH, and
R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
R₇ being a saturated or unsaturated, linear or branched chain comprising from 2 to 12 carbon atoms and eventually one or more heteroatoms, preferably O, N or S.

In this embodiment, preferably, the quantity of monomeric units UB is between 25 and 95 mol%, more preferably between 35 and 80 mol% and even more preferably between 45 and 65 mol%, the quantity of monomeric units UC is between 5 and 50 mol%, more preferably between 15 and 40 mol% and even more preferably between 20 and 30 mol% and, the quantity of monomeric units UD is between 1 and 25 mol%, more preferably between 5 and 20 mol% and even more preferably between 10 and 15 mol%.

In another embodiment, the water reducing polymer (C1) is an IPEG. IPEG are copolymers derived from acrylic acid monomers and from isoprenol poly(ethylene glycol) macromonomers.

In this embodiment, the water reducing polymer (C1) is a copolymer comprising the following monomeric units:
- units UB 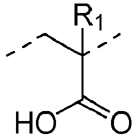
- units UC 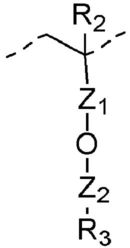
- units UD 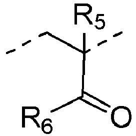
wherein: - - - represents a bonding site of a monomeric unit
the quantity of monomeric units UB is between 25 and 95 mol%,
the quantity of monomeric units UC is between 5 and 50 mol%,
the quantity of monomeric units UD is between 0 and 25 mol%,
R₁ is hydrogen or methyl,
R₂ is hydrogen
Z₁ is an ethyl,
Z2 is a bond,
R₃ is -(CH₂CH₂O)ₘ-R₄, -(CH(CH₃)CH₂O)ₙ-R₄ or -(CH₂CH₂OCH(CH₃)CH₂O)_{y}-R₄
m, n and y being an integer independently comprised between 7 and 100,
R₄ is hydrogen or methyl,
R₅ is hydrogen, methyl or -CH₂COOH, and
R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
R₇ being a saturated or unsaturated, linear or branched chain comprising from 2 to 12 carbon atoms and eventually one or more heteroatoms, preferably O, N or S.

In this embodiment, preferably, the quantity of monomeric units UB is between 25 and 95 mol%, more preferably between 35 and 80 mol% and even more preferably between 45 and 65 mol%, the quantity of monomeric units UC is between 5 and 50 mol%, more preferably between 15 and 40 mol% and even more preferably between 20 and 30 mol% and, the quantity of monomeric units UD is between 1 and 25 mol%, more preferably between 5 and 20 mol% and even more preferably between 10 and 15 mol%.

According to the invention, the rheology enhancing admixture optionally comprises a wetting agent and/or a surfactant, the wetting agent as well as the surfactant decreases the surface tension of water below 68 mN.m⁻¹ and wherein the wetting agent is selected in the group comprising, preferably consisting of, glycol compounds having a molecular weight comprised between 60 g.mol⁻¹ and 130 g.mol⁻¹, and wherein the surfactant have a molecular weight comprised between 131 g.mol⁻¹ and 300 g.mol⁻¹.

The wetting agent and the surfactant may be cationic, anionic or non-ionic, preferably non-ionic. Is considered non-ionic, a species that presents an overall neutral electrical charge, i.e. having the same number of positive charge(s) and negative charge(s), or the total absence of any positive or negative electrical charge.

The decrease of the surface tension is measured by the following method:
- preparing a solution S1 of the wetting agent or the surfactant at a concentration of 0,5 g.L⁻¹ in a milliQ water
- measuring the surface tension of the solution S1 with a Du Nouy ring method,
- measuring the surface tension of the milliQ water with the same Du Nouy ring method at the same temperature and pressure.
- Calculating the percentage of variation of the surface tension between the miliQ water and the solution S1.

In preferred embodiment, the wetting agent is selected in the group comprises, preferably consisting of, 2-methyl-2,4-pentanediol (MPD), diethylene glycol (DEG), neopentyl glycol (NPG) and mixtures therefore.

In preferred embodiment, the surfactant may be 2,4,7,9-tetramethyldec-5-yne-4,7diol.

### Optional other components

The binder composition is advantageously enriched with one or several other components which are ingredients, notably functional additives preferably selected in the following list:
- *Water retention agent.*

A water retention agent has the property to keep the water of mixing before the setting. The water is so trapped in the wet formulation paste which improves its bond. To some extent, the water is less absorbed by the support.

The water retentive agent is preferably chosen in the group comprising: modified celluloses, modified guars, modified cellulose ethers and/or guar ether and their mixes, more preferably consisting of: methylcelluloses, methylhydroxypropylcelluloses, methylhydroxyethyl-celluloses and their mixes.
- *Rheological agent*

The possible rheological agent (also named a "thickener") is preferably chosen in the group comprising, more preferably consisting of: starch ethers, cellulose ethers and/or gums (e.g. Welan guar xanthane, succinoglycans), modified polysaccharides -preferably among modified starch ethers-, polyvinylic alcohols, polyacrylamides, sepiolites, and their mixes.
- *DefoamerlAntifoams*

The possible defoamer is preferably chosen in the group comprising, more preferably consisting of: polyether polyols and mixes thereof.
- *Biocide*

The possible biocide is preferably chosen in the group comprising, more preferably consisting of: mineral oxides like zinc oxide and mixes thereof.
- *Pigment*

The possible pigment is preferably chosen in the group comprising, more preferably consisting of: TiO₂, iron oxide and mixes thereof.
- *Flame retardant*

Flame retardant (or flame proof agent) makes it possible to increase the fire resistance and/or to shrink the speed of flame spreading of the composition.
- *Air-entraining agents*

Air-entraining agents (surfactants) are advantageously chosen in the group comprising, more preferably consisting of, natural resins, sulfated or sulfonated compounds, synthetic detergents, organic fatty acids and their mixes, preferably in the group comprising, more preferably consisting in the lignosulfonates, the basic soaps of fatty acids and their mixes, and, more preferably in the group comprising, more preferably consisting of, the sulfonate olefins, the sodium lauryl sulfate and their mixes.
- *Retarders*

Retarders are advantageously chosen in the group comprising, more preferably consisting of, tartric acid and its salts: sodium or potassium salts, citric acid and its salts: sodium (trisodic citrate) and their mixes.

In addition, other components may be:
- *Plasticizers*
- *Fibres*
- *Dispersion powders*
- *Polymeric resins*
- *Complexing agents*
- *Drying shrinkage reducing agents based on polyols.*

The total content of these optional other components in the dry concrete composition or dry industrial mortar composition is preferably comprised between 0.1% and 10% by weight of the total weight of the dry concrete composition or dry industrial mortar composition.

### Examples

### Preparation of concrete compositions and Trial on concrete compositions

Concrete compositions were prepared by the following procedure: firstly the aggregates and binder were mixed for 1 minute. The admixture system is added in water and the total amount of water + admixture system is added during mixing. The concrete is mixed for an addition of two minutes.

CEM mortar composition (Mortar concrete equivalent) were prepared following the "Method of the concrete equivalent mortar (CEM) - A new tool to design concrete containing admixture" - A. Schwartzentruber and C.Catherine [1999] Materials and Structures, Vol.33, October 2000.

The time flows of wet concrete composition have been measured according to experimental standard "XP P18-469 - Cone outflow time published by AFNOR on January 2019". Time flow was monitored for up to 1h30 by doing a trial every 30 minutes. Before each new trial, concrete was mixed for 30 seconds.

The time flows of CEM have also been measured according to experimental standard "XP P18-469 - Cone outflow time published by AFNOR on January 2019", except that the cone has an input opening of a diameter of 15.0cm, an output opening of a diameter of 3.9cm, and a height of 12.0cm.

Slump tests were realized with an Abrams cone according to standard NF EN 12350-2. Slump was monitored for up to 1 h30 by doing a trial every 30 minutes. Before each new trial, concrete was mixed for 30 seconds.

The CEM mortar spreads have been measured by a MBE cone according to the "Method of the concrete equivalent mortar (CEM) - A new tool to design concrete containing admixture" - A. Schwartzentruber and C.Catherine [1999] Materials and Structures, Vol.33, October 2000.

Water reducing polymer used in the examples are HPEG RB1050^{®} and HPEG PC1901 manufactured by Maria^{®}, Chryso^{®} Fluid Optima 100 manufactured by Saint Gobain and Viscocrete^{®} tempo 10 manufactured by Sika.

### Example 1: influence of the water reducing polymer

Three concrete compositions were prepared according to table 1 below.

**Table 1**

| | | | E1 | E2 | CE1 |
|---|---|---|---|---|---|
| Component A | Sand (0-4 mm) (kg/m³) | | 920 | 920 | 920 |
| | Limestone aggregate (4-10 mm) (kg/m³) | | 430 | 430 | 430 |
| | Limestone aggregate (10-20 mm) (kg/m³) | | 595 | 595 | 595 |
| Component B 350 kg/m³ | Component B1 (dry weight%) | Portland cement | 20 | 20 | 20 |
| | Component B2 (dry weight %) | Standard GGBS (d₅₀ = 10 µm) | 16.6 | 16.6 | 16.6 |
| | | Fine GGBS (d₅₀ < 5 µm) | 13.4 | 13.4 | 13.4 |
| | Component B3 (dry weight %) | Ultrafine limestone filler (d₅₀ < 3 µm) | 50 | 50 | 50 |
| | Component B4 (dry weight % relative to the total weight of components B1, B2 and B3) | Anhydrite | 2 | 2 | 2 |
| Component C (weight % compared to the total weight of component B) | Component C1 | HPEG Marla RB1050/PC190 1 | 0,62% | | |
| | | Optima 100 | | 1.12 | |
| | | Viscocrete^{®} tempo 10 | | | 0.59 |
| Water | Water to component B weight ratio | | 0.34 | 0.34 | 0.34 |

The time flow and the slump after 0 minute after the mixing, after 30 after 0 minutes after the mixing after 60 minutes after the mixing, and after 90 minutes after the mixing are set forth in table 2 below.

**Table 2**

| | | E1 | E2 | CE1 |
|---|---|---|---|---|
| Time flow (s) | 0 minute | 8.3 | 3.7 | 10.2 |
| | 30 minutes | 6.7 | 3 | UD* |
| | 60 minutes | 9 | 3 | UD* |
| | 90 minutes | 9 | 4 | UD* |
| Slump (mm) | 0 minute | 225 | 190 | 120 |
| | 30 minutes | 230 | 190 | 5 |
| | 60 minutes | 230 | 180 | UD* |
| | 90 minutes | 230 | 200 | UD* |

| | | | | |
|---|---|---|---|---|
| UD*: UnDeterminable | | | | |

As can be seen from table 2, the use of HPEG or Optima 100 allows to maintain the time flow and the slump of the concrete, while the use of viscocrete^{®} Tempo 10 leads to a concrete that stiffens before 30 minutes. This shows that the use of HPEG or Optima increases the open time and rheology.

### Example 2: effect of the wetting agent, on CEMs

Five CEM was prepared according to table 3 below.

**Table 3**

| | | | MBE1 | MBE2 | MBE3 | MBE4 | MBE5 |
|---|---|---|---|---|---|---|---|
| Component A | Sand (0-4 mm) g | | 1392.3 | 1392.3 | 1392.3 | 1392.3 | 1392.3 |
| Component B 470 g | Component B1 (dry weight%) | Portland cement | 20 | 20 | 20 | 20 | 20 |
| | Component B2 (dry weight%) | Standard GGBS (d₅₀ = 10 µm) | 16.6 | 16.6 | 16.6 | 16.6 | 16.6 |
| | | Fine GGBS (d₅₀ < 5 µm) | 13.4 | 13.4 | 13.4 | 13.4 | 13.4 |
| | Component B3 (dry weight%) | Ultrafine limestone filler (d₅₀ < 3 µm) | 50 | 50 | 50 | 50 | 50 |
| | Component B4 (dry weight%) | Anhydrite | 2 | 2 | 2 | 2 | 2 |
| Component C (weight % compared to the total weight of component B) | Component C1 | HPEG system RB1050/PC190 1 | 0.8 | 0.8 | 0.8 | 0.8 | 0.8 |
| | Component C2 | 2-methyl-2,4-pentanediol | | 0.69 | | | |
| | | diethylene glycol | | | 0.69 | | |
| | | neopentyl glycol | | | | 0.69 | |
| | | 2,4,7,9- tetramethyldec- 5-yne-4,7diol | | | | | 0.69 |
| Water | Water to component B weight ratio | | 0.27 | 0.27 | 0.27 | 0.27 | 0.27 |

These MBE have been mixed during 90 seconds after the introduction of water, then the mixing was stopped for performing the time flow and spread tests, then the mixing was restarted. The energy needed for mixing of each sample have been measured as shown in figure 1. As can be seen from figure 1, the energy needed for mixing the MBEs after around 50s is lower for the MBEs (MBE2, MBE3, MBE4 and MBE5) including a wetting agent or a surfactant (component C2).

After the 90 seconds of mixing, the spread one the flow time of each MBE have been measured. The results are set forth in table 4 below.

**Table 4**

| | MBE1 | MBE2 | MBE3 | MBE4 | MBE5 |
|---|---|---|---|---|---|
| Spread (cm) At 90s | 31 | 36.5 | 34 | 34.5 | 36 |
| TimeFlow (s) At 90s | 25 | 19 | 18.5 | 18.5 | 16 |

The addition of a wetting agent or a surfactant allows to decrease the time of mixing necessary to obtain acceptable rheological and viscosity properties. This means that the addition of a wetting agent or a surfactant allows to improve the mixability and therefore obtain a lower viscosity in low water systems and short mixing time.

### Example 3: effect of the wetting agent on concrete compositions

An additional concrete composition was prepared according to table 5 below

**Table 5**

| | | | E1 | E3 |
|---|---|---|---|---|
| Component A | Sand (0-4 mm) (kg/m³) | | 920 | 920 |
| | Limestone aggregate (4-10 mm) (kg/m³) | | 430 | 430 |
| | Limestone aggregate (10-20 mm) (kg/m³) | | 595 | 595 |
| Component B 350 kg/m³ | Component B1 (dry weight%) | Portland cement | 20 | 20 |
| | Component B2 (dry weight %) | Standard GGBS (d₅₀ = 10 µm) | 16.6 | 16.6 |
| | | Fine GGBS (d₅₀ < 5 µm) | 13.4 | 13.4 |
| | Component B3 (dry weight%) | Ultrafine limestone filler (d₅₀ < 3 µm) | 50 | 50 |
| | Component B4 (dry weight %) | Anhydrite | 2 | 2 |
| Component C (weight % compared to the total weight of component B) | Component C1 | HPEG Marla RB1050/PC1901 | 0.62% | 0.62% |
| | Component C2 | MPD | | 0.42 |
| Water | Water to component B weight ratio | | 0.34 | 0.34 |

Immediately after mixing, the spread one the flow time of each wet concrete have been measured. The results are set forth in table 6 below.

**Table 6**

| | | E1 | E3 |
|---|---|---|---|
| Time flow (s) | 0 minute | 8.3 | 6 |
| Slump (mm) | 0 minute | 225 | 230 |

The addition of a wetting agent allows to decrease the time of mixing necessary to obtain acceptable rheological and viscosity properties. This means that the addition of a wetting agent allows to improve the mixability and therefore obtain a lower viscosity in low water systems and short mixing time.

## Claims

1. A process for preparing a wet concrete composition comprising a step of mixing with water:
A. at least one aggregate,
B. a binder system, in an amount of 400 Kg per m³ of the wet concrete composition or less, preferably less than 370 Kg per m³ of the wet concrete composition
C. an admixture formulation,
the binder system (B.) being prepared before the mixing step or in situ during the mixing step, from at least some of the different components of the binder system; said components being taken separately and/or under the form of premix(es),
wherein the binder system (B.) comprises:
(B1) between 1% and 34% in dry weight of at least one lime source;
(B2) between 5% and 75% in dry weight of ground granulated blast furnace slag;
(B3) between 21% and 90% in dry weight of at least one filler;
(B4) between 0.1% and 5% in dry weight, relative to the total weight of components B1, B2 and B3, of SO₃;
said ground granulated blast furnace slag being a particles mixture of particles having a d₅₀ greater than or equal to 5 µm and strictly less than 15 µm, and optionally between 0,1% in weight, in respect with the total weight of the ground granulated blast furnace slag and 100% of particles having a d₅₀ between 1 µm and strictly less 5 µm.
said filler being a particles mixture of particles having a d₅₀ greater than or equal to 0.05 µm and strictly less than 8 µm, and optionally between 0,1% and 50% in weight, in respect with the total weight of the filler of particles having a d₅₀ greater than or equal to 8 µm and strictly less than 200 µm,
measurement of d₅₀ being done by Laser diffraction analysis, also known as Laser diffraction spectroscopy, by means of Laser diffraction analyzer such as "Mastersizer 2000" and commercialized by the MALVERN company, with the humid way method,
wherein said admixture formulation (C.) comprises:
(C1) at least one water reducing polymer;
(C2) optionally a wetting agent and/or a surfactant;
said water reducing polymer (C1) being a polyethylene glycol bearing terminal phosphonate groups and/or a copolymer comprising the following monomeric units:
- units UA 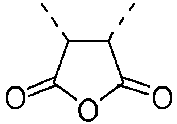
- units UB 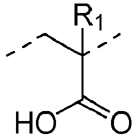
- units UC 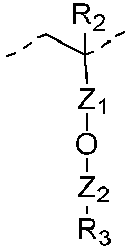
- units UD 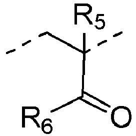
wherein: - - - represents a bonding site of a monomeric unit
the quantity of monomeric units UA is between 0 and 40 mol%,
the quantity of monomeric units UB is between 25 and 95 mol%,
the quantity of monomeric units UC is between 5 and 50 mol%,
the quantity of monomeric units UD is between 0 and 25 mol%,
R₁ and R₂ are independently hydrogen or methyl,
Z₁ is a bond, a methyl or an ethyl,
Z2 is a bond, -CH₂CH₂O-, -CH₂CH₂OCH₂CH₂O- or -CH₂CH₂CH₂CH₂O-
R₃ is -(CH₂CH₂O)ₘ-R₄, -(CH(CH₃)CH₂O)ₙ-R₄ or -(CH₂CH₂OCH(CH₃)CH₂O)_{y}-R₄,
m, n and y being an integer independently comprised between 7 and 100,
R₄ is hydrogen, methyl,
R₅ is hydrogen, methyl or -CH₂COOH, and
R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
R₇ being a saturated or unsaturated, linear or branched chain comprising from 2 to 12 carbon atoms and eventually one or more heteroatoms, preferably O, N or S,
wherein the wetting agent and/or the surfactant, decreases the surface tension of water below 68 mN.m⁻¹ and wherein the wetting agent is selected in the group comprising, preferably consisting of, glycol compounds and having a molecular weight comprised between 60 g.mol⁻¹ and 130 g.mol⁻¹, and wherein the surfactant have a molecular weight comprised between 131 g.mol⁻¹ and 300 g.mol⁻¹
wherein the step of mixing with water is carried out with a water to binder system (B.) weight ratio comprised between 0.2 and 0.4, and more advantageously between 0,25 and 0,35.

2. A process according to claim 1, wherein the aggregate (A.) is sand and/or gravel.

3. A process according to any one of the preceding claims, wherein the lime source (B1) is Portland cement or lime, such as hydraulic lime, calcium hydroxide, slaked lime, quick lime and lime slurry.

4. A process according to any one of the preceding claims, wherein the lime source (B1) is Portland cement, at least a portion of which being ultrafine cement having a d₅₀, lower than or equal to 8 µm, preferably lower than or equal to 3.5 µm,
measurement of d₅₀ being done by Laser diffraction analysis, also known as Laser diffraction spectroscopy, by means of Laser diffraction analyzer such as "Mastersizer 2000" and commercialized by the MALVERN company, with the humid way method.

5. A process according to any one of the preceding claims, wherein the filler (B3) is a natural material sourcing from stone-pit, such as calcite and its polymorphs, like aragonite or vaterite, and dolomite or precipitated calcium carbonates and mixtures thereof.

6. A process according to any one of the preceding claims, wherein the water reducing polymer is anionic, cationic or zwitterionic.

7. A method for controlling mixability, rheology and/or open time of a wet concrete composition including aggregate (A.), water (D.) and a binder system (B.), in an amount of 400 Kg per m³ of the wet concrete composition or less, preferably less than 370 Kg per m³ of the wet concrete composition, comprises:
(B1) between 1% and 34% in dry weight of at least one lime source;
(B2) between 5% and 75% in dry weight of ground granulated blast furnace slag;
(B3) between 21% and 90% in dry weight of at least one filler;
(B4) between 0.1% and 5% in dry weight, relative to the total weight of components B1, B2 and B3, of SO₃;
said ground granulated blast furnace slag being a particles mixture of particles having a d₅₀ greater than or equal to 5 µm and strictly less than 15 µm, and optionally between 0,1% in weight, in respect with the total weight of the ground granulated blast furnace slag and 100% of particles having a d₅₀ between 1 µm and strictly less 5 µm.
said filler being a particles mixture of particles having a d₅₀ greater than or equal to 0.05 µm and strictly less than 8 µm, and optionally between 0,1% and 50% in weight, in respect with the total weight of the filler of particles having a d₅₀ greater than or equal to 8 µm and strictly less than 200 µm,
measurement of d₅₀ being done by Laser diffraction analysis, also known as Laser diffraction spectroscopy, by means of Laser diffraction analyzer such as "Mastersizer 2000" and commercialized by the MALVERN company, with the humid way method,
wherein a water to binder system (B.) weight ratio is comprised between 0.2 and 0.4, and more advantageously between 0,25 and 0,35,
said method including adding to said wet concrete composition an admixture formulation (C.) comprises:
(C1) at least one water reducing polymer;
(C2) optionally a wetting agent and/or a surfactant;
said water reducing polymer (C1) being a polyethylene glycol bearing terminal phosphonate groups and/or a copolymer comprising the following monomeric units:
- units UA 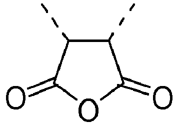
- units UB 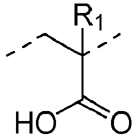
- units UC 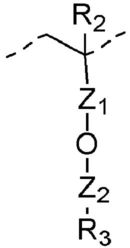
- units UD 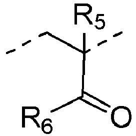
wherein: - - - represents a bonding site of a monomeric unit
the quantity of monomeric units UA is between 0 and 40 mol%,
the quantity of monomeric units UB is between 25 and 95 mol%,
the quantity of monomeric units UC is between 5 and 50 mol%,
the quantity of monomeric units UD is between 0 and 25 mol%,
R₁ and R₂ are independently hydrogen or methyl,
Z₁ is a bond, a methyl or an ethyl,
Z2 is a bond, -CH₂CH₂O-, -CH₂CH₂OCH₂CH₂O- or -CH₂CH₂CH₂CH₂O-
R₃ is -(CH₂CH₂O)ₘ-R₄, -(CH(CH₃)CH₂O)ₙ-R₄ or -(CH₂CH₂OCH(CH₃)CH₂O)_{y}-R₄,
m, n and y being an integer independently comprised between 7 and 100,
R₄ is hydrogen, methyl,
R₅ is hydrogen, methyl or -CH₂COOH, and
R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
R₇ being a saturated or unsaturated, linear or branched chain comprising from 2 to 12 carbon atoms and eventually one or more heteroatoms, preferably O, N or S,
wherein the wetting agent and/or the surfactant, decreases the surface tension of water below 68 mN.m⁻¹ and wherein the wetting agent is selected in the group comprising, preferably consisting of, glycol compounds and having a molecular weight comprised between 60 g.mol⁻¹ and 130 g.mol⁻¹, and wherein the surfactant have a molecular weight comprised between 131 g.mol⁻¹ and 300 g.mol⁻¹

8. Use of an admixture formulation (C.) comprising:
(C1) at least one water reducing polymer;
(C2) optionally a wetting agent and/or a surfactant;
said water reducing polymer (C1) being a polyethylene glycol bearing terminal phosphonate groups and/or a copolymer comprising the following monomeric units:
- units UA 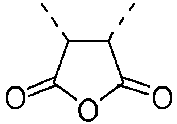
- units UB 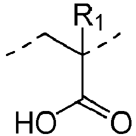
- units UC 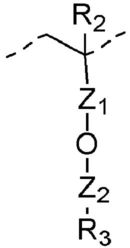
- units UD 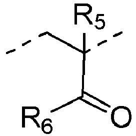
wherein: - - - represents a bonding site of a monomeric unit
the quantity of monomeric units UA is between 0 and 40 mol%,
the quantity of monomeric units UB is between 25 and 95 mol%,
the quantity of monomeric units UC is between 5 and 50 mol%,
the quantity of monomeric units UD is between 0 and 25 mol%,
R₁ and R₂ are independently hydrogen or methyl,
Z₁ is a bond, a methyl or an ethyl,
Z2 is a bond, -CH₂CH₂O-, -CH₂CH₂OCH₂CH₂O- or -CH₂CH₂CH₂CH₂O-
R₃ is -(CH₂CH₂O)ₘ-R₄, -(CH(CH₃)CH₂O)ₙ-R₄ or -(CH₂CH₂OCH(CH₃)CH₂O)_{y}-R₄,
m, n and y being an integer independently comprised between 7 and 100,
R₄ is hydrogen, methyl,
R₅ is hydrogen, methyl or -CH₂COOH, and
R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
R₇ being a saturated or unsaturated, linear or branched chain comprising from 2 to 12 carbon atoms and eventually one or more heteroatoms, preferably O, N or S,
wherein the wetting agent and/or the surfactant, decreases the surface tension of water below 68 mN.m⁻¹ and wherein the wetting agent is selected in the group comprising, preferably consisting of, glycol compounds and having a molecular weight comprised between 60 g.mol⁻¹ and 130 g.mol⁻¹, and wherein the surfactant have a molecular weight comprised between 131 g.mol⁻¹ and 300 g.mol⁻¹,
for controlling mixability, rheology and/or open time of a wet concrete composition including aggregate (A.), water (D.) and a binder system (B.), in an amount of 400 Kg per m³ of the wet concrete composition or less, preferably less than 370 Kg per m³ of the wet concrete composition, comprises:
(B1) between 1% and 34% in dry weight of at least one lime source;
(B2) between 5% and 75% in dry weight of ground granulated blast furnace slag;
(B3) between 21% and 90% in dry weight of at least one filler;
(B4) between 0.1% and 5% in dry weight, relative to the total weight of components B1, B2 and B3, of SO₃;
said ground granulated blast furnace slag being a particles mixture of particles having a d₅₀ greater than or equal to 5 µm and strictly less than 15 µm, and optionally between 0,1% in weight, in respect with the total weight of the ground granulated blast furnace slag and 100% of particles having a d₅₀ between 1 µm and strictly less 5 µm.
said filler being a particles mixture of particles having a d₅₀ greater than or equal to 0.05 µm and strictly less than 8 µm, and optionally between 0,1% and 50% in weight, in respect with the total weight of the filler of particles having a dso greater than or equal to 8 µm and strictly less than 200 µm,
measurement of d₅₀ being done by Laser diffraction analysis, also known as Laser diffraction spectroscopy, by means of Laser diffraction analyzer such as "Mastersizer 2000" and commercialized by the MALVERN company, with the humid way method,
wherein a water to binder system (B.) weight ratio is comprised between 0.2 and 0.4, and more advantageously between 0,25 and 0,35.

9. A wet concrete composition comprising:
A. at least one aggregate,
B. a binder system, in an amount of 400 Kg per m³ of the wet concrete composition or less, preferably less than 370 Kg per m³ of the wet concrete composition,
C. an admixture formulation,
D. water,
wherein the binder system (B.) comprises:
(B1) between 1% and 34% in dry weight of at least one lime source;
(B2) between 5% and 75% in dry weight of ground granulated blast furnace slag;
(B3) between 21% and 90% in dry weight of at least one filler;
(B4) between 0.1% and 5% in dry weight, relative to the total weight of components B1, B2 and B3, of SO₃;
said ground granulated blast furnace slag being a particles mixture of particles having a d₅₀ greater than or equal to 5 µm and strictly less than 15 µm, and optionally between 0,1% in weight, in respect with the total weight of the ground granulated blast furnace slag and 100% of particles having a d₅₀ between 1 µm and strictly less 5 µm.
said filler being a particles mixture of particles having a d₅₀ greater than or equal to 0.05 µm and strictly less than 8 µm, and optionally between 0,1% and 50% in weight, in respect with the total weight of the filler of particles having a d₅₀ greater than or equal to 8 µm and strictly less than 200 µm,
measurement of d₅₀ being done by Laser diffraction analysis, also known as Laser diffraction spectroscopy, by means of Laser diffraction analyzer such as "Mastersizer 2000" and commercialized by the MALVERN company, with the humid way method,
wherein said admixture formulation (C.) comprises:
(C1) at least one water reducing polymer;
(C2) optionally a wetting agent and/or a surfactant;
said water reducing polymer (C1) being a polyethylene glycol bearing terminal phosphonate groups and/or a copolymer comprising the following monomeric units:
- units UA 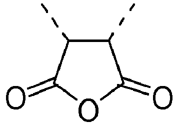
- units UB 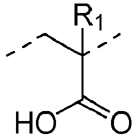
- units UC 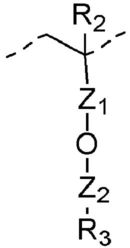
- units UD 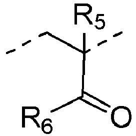
wherein: - - - represents a bonding site of a monomeric unit
the quantity of monomeric units UA is between 0 and 40 mol%,
the quantity of monomeric units UB is between 25 and 95 mol%,
the quantity of monomeric units UC is between 5 and 50 mol%,
the quantity of monomeric units UD is between 0 and 25 mol%,
R₁ and R₂ are independently hydrogen or methyl,
Z₁ is a bond, a methyl or an ethyl,
Z2 is a bond, -CH₂CH₂O-, -CH₂CH₂OCH₂CH₂O- or -CH₂CH₂CH₂CH₂O-
R₃ is -(CH₂CH₂O)ₘ-R₄, -(CH(CH₃)CH₂O)ₙ-R₄ or -(CH₂CH₂OCH(CH₃)CH₂O)_{y}-R₄,
m, n and y being an integer independently comprised between 7 and 100,
R₄ is hydrogen, methyl,
R₅ is hydrogen, methyl or -CH₂COOH, and
R₆ is -OH, -OCH₂OH, -OCH₂CH₂OH, -OCH₂CH₂CH₂OH, -OCH₂CH(CH₃)CH₂OH, - OCH₂CH₂CH₂CH₂OH, -NHR₇, a group bearing a phosphate function, a group bearing phosphonate function or a group bearing sulfonate function,
R₇ being a saturated or unsaturated, linear or branched chain comprising from 2 to 12 carbon atoms and eventually one or more heteroatoms, preferably O, N or S,
wherein the wetting agent and/or the surfactant, decreases the surface tension of water below 68 mN.m⁻¹ and wherein the wetting agent is selected in the group comprising, preferably consisting of, glycol compounds and having a molecular weight comprised between 60 g.mol⁻¹ and 130 g.mol⁻¹, and wherein the surfactant have a molecular weight comprised between 131 g.mol⁻¹ and 300 g.mol⁻¹, and
wherein a water to binder system (B.) weight ratio is comprised between 0.2 and 0.4, and more advantageously between 0,25 and 0,35.

10. Hardened concrete composition obtained from the wet concrete composition according to claim 9.
